**Europäisches Patentamt**

(19) **European Patent Office**

**Office européen des brevets**

(11) Veröffentlichungsnummer: **0 232 294**
**B1**

(12) ## EUROPÄISCHE PATENTSCHRIFT

(45) Veröffentlichungstag der Patentschrift:
**22.03.89**

(51) Int. Cl.⁴: **B 62 D 55/21**

(21) Anmeldenummer: **86904099.8**

(22) Anmeldetag: **16.07.86**

(86) Internationale Anmeldenummer:
**PCT/DE 86/00290**

(87) Internationale Veröffentlichungsnummer:
**WO 87/00496 (29.01.87 Gazette 87/3)**

(54) GELENKGLIED ZUM VERBINDEN DER ZWEI KETTENENDEN EINER SPURKETTE FÜR KETTENFAHRZEUGE.

(30) Priorität: **19.07.85 DE 3525748**

(43) Veröffentlichungstag der Anmeldung:
**19.08.87 Patentblatt 87/34**

(45) Bekanntmachung des Hinweises auf die Patenterteilung:
**22.03.89 Patentblatt 89/12**

(84) Benannte Vertragsstaaten:
**AT BE CH DE FR GB IT LI LU NL SE**

(56) Entgegenhaltungen:
**DE-C- 3 337 627**

(73) Patentinhaber: **Intertractor Viehmann GmbH. & Co,
Hagenerstrasse 325, D-5820 Gevelsberg (DE)**

(72) Erfinder: **BÖKAMP, Theo, Moosweg 6,
D-5800 Hagen 8 (DE)**
Erfinder: **HELFRICH, Franz-Joachim, Klinikstrasse 34,
D-4630 Bochum 1 (DE)**

(74) Vertreter: **Köchling, Conrad-Joachim et al,
Patentanwälte Dipl.-Ing. Conrad Köchling, Dipl.-Ing.
Conrad-Joachim Köchling Fleyer Strasse 135,
D-5800 Hagen 1 (DE)**

## Beschreibung

Die Erfindung betrifft ein Gelenkglied zum Verbinden der zwei Kettenenden einer Spurkette von Kettenfahrzeugen, wobei zwei zueinander parallel angeordnete Gliedwangen vorgesehen sind, jede Gliedwange aus zwei einander sich überlappenden Gliedwangenteilen besteht, in welchen je eine Bohrung zur Aufnahme eines Gelenkbolzens angeordnet ist, die miteinander korrespondierenden Anlageseiten der Gliedwangenteile zur Schwenkebene letzterer parallel verlaufend angeordnet sind, an den miteinander korrespondierenden Anlageseiten der Gliedwangenteile ineinandergreifende Verzahnungen vorgesehen sind, eine beide Gliedwangen überbrückende Bodenplatte vorgesehen ist, die mittels letztere durchgreifender Schrauben mit den Gliedwangen lösbar verbunden ist, die Verzahnungen in Richtung ihrer Längserstreckung zur Längserstreckung des Kettengliedes quer verlaufend angeordnet sind, zudem so hinterschnitten ausgebildet sind, dass diese zur Zugkraft beeinflusst auf die miteinander korrespondierenden Gliedwangenteile zueinander gerichtete Querkräfte ausüben.

Ein Gelenkglied dieser Art ist aus der DE-OS 30 13 026 bekannt.

Hierbei verlaufen deren Zähne und Zahnlücken auf konzentrischen Kreisen, deren Zentren auf einer Gelenkbolzenachse liegen, so dass sich die Kette relativ leicht schliessen lässt. Die Herstellung derartiger Zähne ist aber relativ umständlich und teuer.

Noch schwieriger und teurer wird die Herstellung, wenn gemäss des DE-GM 82 25 641.1 die Flanken der Zahnlücke der einen Gliedwange sich auf der der Bodenplatte abgewandten Seite der Zahnlücke einander nähernd ausgebildet sein sollen, wobei der Abstand der Flanken voneinander in diesem Bereich gering kleiner als die Dicke des in die Zahnlücke einschiebbaren Zahnes der Gliedwange ist, um beim Schliessen der Kette eine gewisse Vorfixierung der ineinandergreifenden Verzahnungen zu erreichen, bevor die Bodenplatte montiert ist.

Aufgabe der Erfindung ist es nun, ein Gelenkglied der im Oberbegriff des Anspruches 1 angegebenen Art unter Beibehaltung der beim Stand der Technik bereits erreichten Vorteile dahingehend zu verbessern, dass eine einfachere und billigere Herstellung erreichbar ist.

Die Lösung dieser Aufgabe ist dadurch gekennzeichnet, dass die Flanken der Zähne und der Zahnlücken in Richtung ihrer Längserstreckung über ihre gesamte Länge gerade und sowohl an der der Bodenplatte zugewandten Längsseite als auch an der der Bodenplatte abgewandten Längsseite des Kettengliedes frei auslaufend ausgebildet sind, und dass ferner die durch Zugkraft beanspruchten ersten Flanken der Zähne und der Zahnlücken zur Längserstreckung der Kettengliedes rechtwinklig gerichtet angeordnet sind, während die anderen, zweiten durch Zugkraft unbelasteten Flanken der Zähne und der Zahnlücken zu den ersten Flanken in Richtung ihrer Längserstreckung zueinander spitzwinklig verlaufend angeordnet sind, wobei vorzugsweise zudem die ersten und die zweiten Flanken der Zähne und der Zahnlücken zueinander im spitzen Winkel von ca. 6° angeordnet sind.

Die über ihre gesamte Länge geraden und an beiden Längsseiten der Gliedwangenteile frei ausmündenden Flanken sind zweifellos wesentlich einfacher und billiger als gekrümmte Flanken herstellbar.

Auch lassen sich die Gliedwangenteile nach wie vor relativ einfach zusammenfügen und es wird auch eine gewisse Vorfixierung der lagerichtig zusammengefügten Gliedwangenteile erreicht, bevor die Bodenplatte montiert ist.

Weitere im Sinne der Aufgabe förderliche Ausgestaltungen sind in den Ansprüchen 3 bis 5 offenbart.

Ein Ausführungsbeispiel der Erfindung ist in den Zeichnungen dargestellt und wird im folgenden näher beschrieben.

Es zeigen:

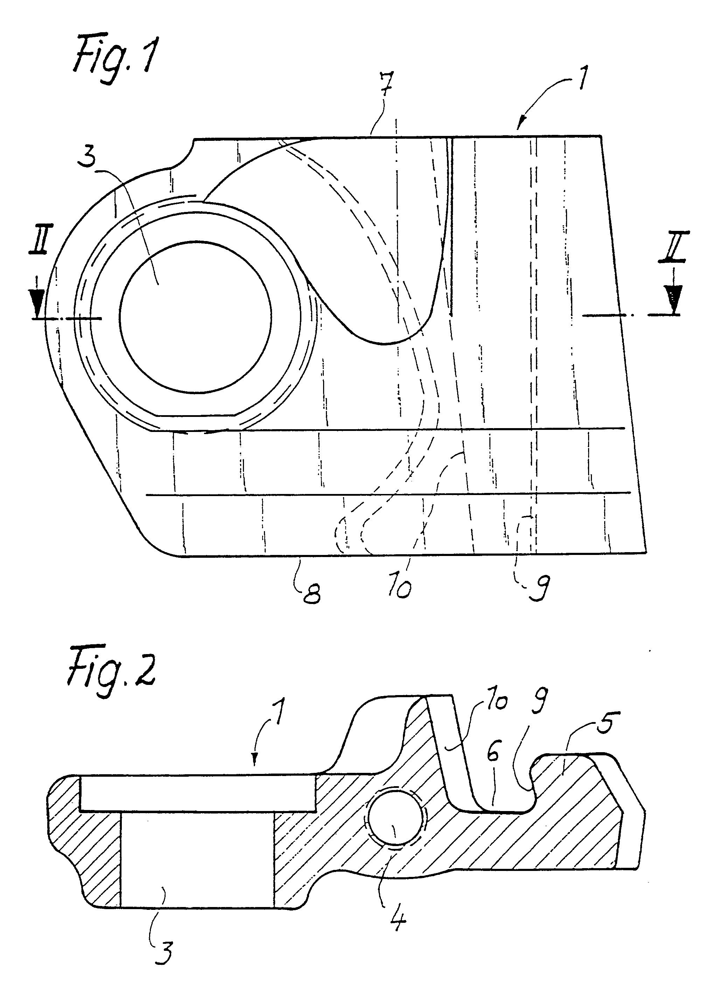

Fig. 1 ein Gliedwangenteil in der Vorderansicht,

Fig. 2 desgleichen entsprechend der Linie II-II der Fig. 1 gesehen,

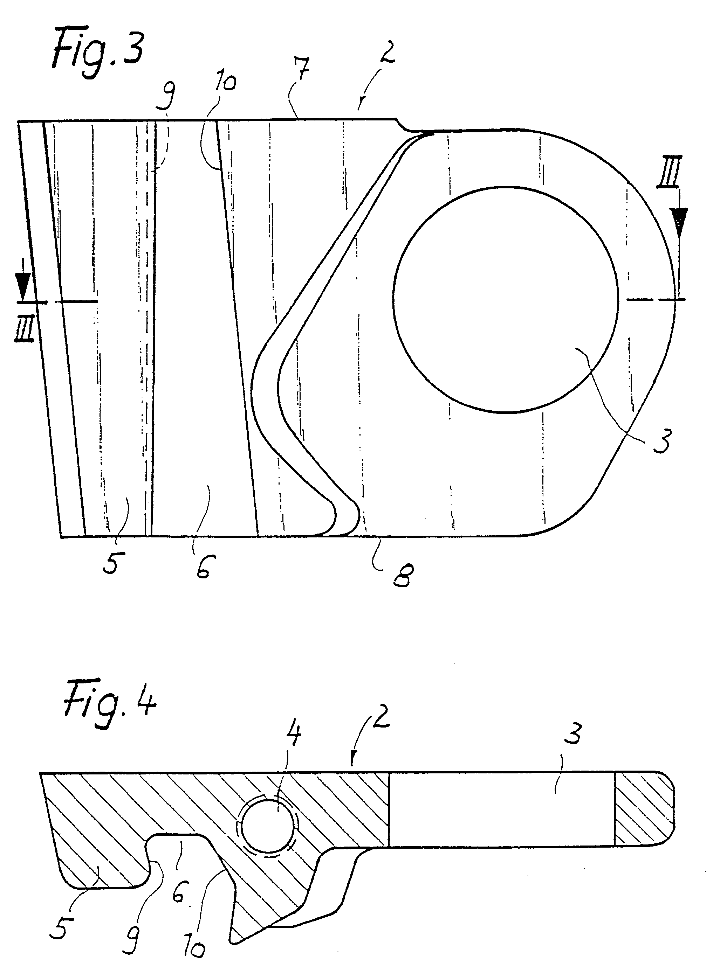

Fig. 3 den zweiten Gliedwangenteil in der Vorderansicht,

Fig. 4 desgleichen gemäss der Linie IV-IV der Fig. 3 gesehen.

Das Gelenkglied zum Verbinden der zwei Kettenenden einer Spurkette besteht aus zwei zueinander parallelen Gliedwangen. Beide dieser Gliedwangen umfassen jeweils zwei Gliedwangenteile 1 + 2, in welchen je eine Bohrung 3 zur Aufnahme eines nicht dargestellten Kettenbolzens bzw. einer Kettenbuchse angeordnet ist. Der Kettenbolzen und die Kettenbuchse werden mit Presssitz angeordnet, so dass sie nur unter Aufwendung hoher Kräfte gelöst werden können.

Die in ihrer Gebrauchslage einander überlappend angeordneten Gliedwangenteile 1 + 2 haben an ihren miteinander korrespondierenden und zur Schwenkebene letzterer parallel verlaufenden Anlageseiten ineinandergreifende Verzahnungen.

Ausserdem sind in den schmalen Längsseiten der Gliedwangenteile Gewindebohrungen 4 zur Aufnahme von nicht dargestellten Schrauben vorgesehen, mit welchen eine ebenfalls nicht dargestellte, die beiden Gliedwangen eines Gelenkgliedes überbrückende Bodenplatte befestigt wird.

Die Verzahnungen sind in Richtung ihrer Längserstreckung zur Längserstreckung der Gliedwangenteile 1 + 2 quer verlaufend angeordnet.

Zudem sind die Verzahnungen so hinterschnitten ausgebildet, dass diese durch Zugkraft beeinflusst die Gliedwangenteile 1 + 2 zueinanderdrängen. Beide Gliedwangenteile 1 + 2 haben je einen, am freien Ende eines jeden Gliedwangenteiles angeordneten Zahn 5 und eine daneben befindliche Zahnlücke 6. Die Zahnlücken 6 sind so profiliert, dass der Zahn 5 des jeweils einen Gliedwangenteiles in die Zahnlücke des jeweils anderen Gliedwangenteiles formschliessend eingreift.

Zudem sind die Flanken der Zähne 5 und der Zahnlücken 6 jeweils über ihre gesamte Länge gerade und an den schmalen Längsseiten 7 + 8 frei auslaufend ausgebildet. Ferner sind die durch Zugkraft beim Umlauf der Kette belasteten, ersten Flanken 9 zu den Längsseiten 7 + 8 rechtwinklig und die durch Zugkraft unbelasteten Flanken 10 zu der jeweils benachbarten Flanke 9 im spitzen Winkel von vorzugsweise 6° angeordnet.

Die Länge eines Zahnes 5 bzw. einer Zahnlücke 6 ist etwa 6mal so gross als die kleinste lichte Weite einer Zahnlücke 6 und die kleinste lichte Weite einer Zahnlücke 6 gleicht etwa deren Tiefe.

Weiterhin sind die Flanken 9 zu Schwenkebene der Gliedwangenteile 1 und 2 im Winkel von etwa 12° angeordnet. Beim Gliedwangenteil 1 sind die freie Stirnseite und die mit der vorgenannten Stirnseite zusammenwirkende Flanke der Zahnlücke 6 des Gliedwangenteiles 2 der vorgenannten Stirnseite entsprechend so stumpfwinklig profiliert, dass der den Anlageseiten abgewandte Stirnseitenabschnitt und der diesem gegenüberliegende hinterschnittene Zahnlückenflankenabschnitt bei ineinandergreifenden Verzahnungen durch Formschluss eine Trennung der beiden Gliedwangenteile 1 und 2 voneinander ausschliessen.

Zudem sind der den Anlageseiten zugewandte Stirnseitenabschnitt und der diesem benachbarte Zahnflankenabschnitt zur Schwenkebene im Winkel von etwa 30° angeordnet.


## Patentansprüche

1. Gelenkglied zum Verbinden der zwei Kettenenden einer Spurkette von Kettenfahrzeugen, wobei zwei zueinander parallel angeordnete Gliedwangen vorgesehen sind, jede Gliedwange aus zwei einander sich überlappenden Gliedwangenteilen besteht, in welchen je eine Bohrung zur Aufnahme eines Gelenkbolzens angeordnet ist, die miteinander korrespondierenden Anlageseiten der Gliedwangenteile zur Schwenkebene letzterer parallel verlaufend angeordnet sind, an den miteinander korrespondierenden Anlageseiten der Gliedwangenteile ineinandergreifende Verzahnungen vorgesehen sind, eine beide Gliedwangen überbrückende Bodenplatte vorgesehen ist, die mittels letztere durchgreifender Schrauben mit den Gliedwangen lösbar verbunden ist, die Verzahnungen in Richtung ihrer Längserstreckung zur Längserstreckung des Kettengliedes quer verlaufen angeordnet sind, zudem so hinterschnitten ausgebildet sind, dass diese zur Zugkraft beeinflusst auf die miteinander korrespondierenden Gliedwangenteile zueinander gerichtete Querkräfte ausüben, dadurch gekennzeichnet, dass die Flanken (9, 10) der Zähne (5) und der Zahnlücken (6) in Richtung ihrer Längserstreckung über ihre gesamte Länge gerade und sowohl an der der Bodenplatte zugewandten Längsseite (7) als auch an der der Bodenplatte abgewandten Längsseite (8) des Kettengliedes frei auslaufend ausgebildet sind, und dass ferner die durch Zugkraft beanspruchten ersten Flanken (9) der Zähne (5) und der Zahnlücken (6) zur Längserstreckung des Kettengliedes rechtwinklig gerichtet angeordnet sind, während die anderen, zweiten durch Zugkraft unbelasteten Flanken (10) der Zähne (5) und der Zahnlücken (6) zu den ersten Flanken (9) in Richtung ihrer Längserstreckung zueinander spitzwinklig verlaufend angeordnet sind.

2. Gelenkglied nach Anspruch 1, dadurch gekennzeichnet, dass die ersten und die zweiten Flanken (9, 10) der Zähne (5) und der Zahnlücken (6) zueinander im spitzen Winkel von ca. 6° angeordnet sind.

3. Gelenkglied nach Anspruch 1 oder 2, dadurch gekennzeichnet, dass die Länge eines Zahnes (5) bzw. einer Zahnlücke (6) zur kleinsten lichten Weite einer Zahnlücke (6) sich etwa wie 6:1 verhält.

4. Gelenkglied nach einem der vorherigen Ansprüche, dadurch gekennzeichnet, dass die Tiefe einer Zahnlücke (6) und ihre kleinste lichte Weite etwa gleich gross sind.

5. Gelenkglied nach einem der vorherigen Ansprüche, dadurch gekennzeichnet, dass die ersten, durch Zugkraft belasteten Flanken (9) der Zähne (5) und der Zahnlücken (6) zur Schwenkebene der Gliedwangenteile (1, 2) in einem Winkel von ca. 12° angeordnet sind.


## Claims

1. A pivoting link for connecting the two chain ends of a chaintrack for tracked vehicles whereby two side pieces of a link arranged parallel to one another are provided, each side piece of the link consists of two overlapping side piece parts in each of which a bored hole to accept a joint bolt is provided, the contacting sides corresponding with one another of the side piece parts are arranged running parallel to the swivelling plane of the latter, intermeshing sets of teeth are provided on the contacting sides corresponding with one another of the side piece parts, a base plate bridging over both side pieces of the link is provided which is reversibly attached by means of screws penetrating through it to the side pieces of the link, the sets of teeth are arranged with the direction of their longitudinal extent running at right angles to the direction of the longitudinal extent of the chain link, and in addition are formed cut backwards in such a way that they exert forces directed transversely to the tractive force exerted on the side piece parts corresponding with one another, characterized in that the flanks (9, 10) of the teeth (5) and the spaces between the teeth (6) are straight over their entire length in the direction of their longitudinal extent and are formed opening out freely both on the longitudinal side (7) of the chain link facing towards the base plate and also on the longitudinal side (8) facing away from the base plate, and further in that the first flanks (9), acted on by the tractive force, of the teeth (5) and of the spaces between the teeth (6) are arranged directed at right angles to the longitudinal extent of the chain link, whilst the other, second flanks (10) of the teeth (5) and the spaces between the teeth (6) not acted on by the tractive force are arranged running, in the direction of their longitudinal extents, at an acute angle to the first flanks (9).

2. A pivoting link according to Claim 1, characterized in that the first and the second flanks (9, 10) of the teeth (5) and the spaces between the teeth (6) are arranged at an acute angle of ca. 6° to one another.

3. A pivoting link according to Claim 1 or 2, characterized in that the ratio of the length of a tooth (5) or a space between the teeth (6) to the smallest opening width of a space between the teeth (6) is about 6:1.

4. A pivoting link according to one of the previous Claims, characterized in that the depth of a space between the teeth (6) and its smallest opening width are approximately of the same size.

5. A pivoting link according to one of the previous Claims, characterized in that the first flanks (9), acted on by the tractive force, of the teeth (5) and of the spaces between the teeth (6) are arranged at an angle of ca. 12° to the pivoting plane of the parts of the side pieces of the link (1, 2).

**Revendications**

1. Elément articulé destiné à la liaison des deux extrémités de chenille de véhicules chenillés, comportant deux joues agencées parallèlement l'une par rapport à l'autre, chaque joue étant constituée de deux parties de joue se recouvrant mutuellement et équipées chacune d'un alésage destiné à recevoir un axe d'articulation, les faces de contact des parties de joue correspondant les unes aux autres étant agencées parallèlement au plan de basculement desdites parties de joue, les faces de contact des parties de joue, correspondant les unes aux autres, comportant des dentures s'engageant les unes dans les autres, une plaque de base étant prévue qui relie les deux joues et qui est assemblée de manière amovible avec les joues à l'aide de vis les traversant, les dentures étant agencées, dans leur direction longitudinale, transversalement par rapport à la direction longitudinale de l'élément de chenille et étant, de plus, contre-dépouillées, de telle sorte qu'elles exercent des efforts transversaux orientés les uns vers les autres sur les parties de joue correspondant les unes aux autres, sous l'influence d'une force de traction, caractérisé en ce que les flancs (9, 10), des dents (5) et entredents (6) s'étendent dans leur sens longitudinal, en ligne droite sur toute leur longueur et se terminent librement tant sur la face longitudinale (7) orientée vers la plaque de base que sur la face longitudinale (8) opposée à la plaque de base de l'élément de chenille, et en ce que, en outre, les premiers flancs (9) des dents (5) et entredents (6) sollicités par un effort de traction sont agencés perpendiculairement à la direction longitudinale de l'élément de chenille, tandis que les autres, deuxièmes flancs (10) des dents (5) et entredents (6) non sollicités par un effort de traction s'étendent, dans la direction longitudinale, en formant un angle aigu avec les premiers flancs (9).

2. Elément articulé selon la revendication 1, caractérisé en ce que les premiers et les deuxièmes flancs (9, 10) des dents (5) et entredents (6) sont agencés de manière à former un angle aigu entre eux, d'environ 6°.

3. Elément articulé selon la revendication 1 ou 2, caractérisé en ce que la longueur d'une dent (5) ou d'un entredent (6) est dans le rapport 6:1 face à la plus petite ouverture d'un entredent (6).

4. Elément articulé selon l'une quelconque des revendications précédentes, caractérisé en ce que la profondeur d'un entredent (6) et la plus petite ouverture de celui-ci sont approximativement de même grandeur.

5. Elément articulé selon l'une quelconque des revendications précédentes, caractérisé en ce que les premiers flancs (9) des dents (5) et entredents (6), sollicités par l'effort de traction, forment un angle d'environ 12° avec le plan d'articulation des parties de joue (1, 2).

*Fig.1*

7

1

3

II

II

8  10  9

*Fig.2*

1

10  9

6  5

3

4

Fig.3

Fig.4